# EUROPEAN PATENT APPLICATION

(11) **EP 4 366 024 A1**
(43) Date of publication of application: **08.05.2024**
(21) Application number: 22916769.7
(22) Date of filing: 28.12.2022
(51) Int. Cl.: H01M 10/0567, H01M 10/052, H01M 4/48

(54) **NON-AQUEOUS ELECTROLYTE AND LITHIUM SECONDARY BATTERY USING SAME**

(30) Priority: 28.12.2021 JP 2021214312
(71) Applicant: LG Energy Solution, Ltd., Seoul 07335 (KR)
(72) Inventor: IGARASHI, Yoshiyuki, Yokohama-shi, Kanagawa 220--0011 (JP)
(74) Representative: Hoffmann Eitle
(86) International application number: PCT/KR2022/021552
(87) International publication number: WO 2023/128628

(57) **Abstract**

Provided is a non-aqueous electrolyte capable of inhibiting an increase in battery resistance when repeating charge/discharge cycles. The non-aqueous electrolyte includes a compound represented by the following Chemical Formula 1: 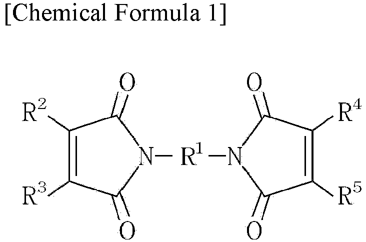 wherein R¹ represents a C3-C20 linear or branched alkylene group, and each of R² to R⁵ independently represents a hydrogen atom, a halogen atom or a C1-C5 alkyl group.

## Description

### TECHNICAL FIELD

The present disclosure relates to a non-aqueous electrolyte and a lithium secondary battery using the same.

The present application claims priority to Japanese Patent Application No. 2021-214312 filed on December 28, 2021, the disclosures of which are incorporated herein by reference.

### BACKGROUND ART

Lithium secondary batteries have been used widely not only for portable instruments, such as cellular phones and notebook PCs, but also for automobile and industrial storage batteries, and for novel use, such as drones. Although lithium secondary batteries originally have a relatively higher energy density as compared to the other types of secondary batteries, they have discussed to increase the charge voltage thereof in order to provide lithium secondary batteries having higher energy density.

According to the related art, lithium cobaltate (LCO) has been used as a positive electrode active material of a lithium secondary battery. However, use of a ternary positive electrode active material, nickel-cobalt-manganese (NCM), has been extended. NCM is advantageous not only in terms of high energy density but also in terms of cost efficiency by virtue of a decrease in use of cobalt.

In addition, development of a material including silicon, such as SiO, incorporated to a conventional graphite material has been conducted as a negative electrode active material in order to improve the capacity density of a lithium secondary battery. Since a silicon-containing material has high theoretical capacity, it is expected that such a material is applied to automobile purposes requiring high capacity.

An electrolyte plays a role in ion conduction to operate a battery, and addition of an additive to the electrolyte has been studied to date in order to improve the function/performance of the electrolyte. In addition, recently, it is required to develop an electrolyte optimized to a positive electrode active material and negative electrode active material used in a battery.

The electrolyte is decomposed through reduction, and the decomposition product is deposited on the surface of a negative electrode. In addition, an electrolyte ingredient-derived coating film called 'solid electrolyte interface (SEI)' film is formed on the negative electrode surface. As compared to the conventionally used graphite materials, the silicon-containing material undergoes a larger change in volume according to charge/discharge, and thus there is a need for forming a soft SEI film compliable to such a change in volume.

As an electrolyte additive forming the SEI film, vinylene carbonate (VC) having a double bond in a cyclic structure has been used widely. However, when using an electrolyte containing vinylene carbonate, it is likely that the internal resistance of a battery is increased. Therefore, vinylene carbonate is problematic in use for a long-term preservation battery. Therefore, it is expected to develop an electrolyte having excellent characteristics to inhibit an increase in battery resistance even after repeating charge/discharge cycles.

In Patent Document 1, it is disclosed that use of a non-aqueous electrolyte including a polymer which is a reaction product of a maleimide compound with barbituric acid can inhibit a change in direct current resistance. However, Patent Document 1 merely discloses some embodiments wherein the additive is incorporated to a positive electrode. In addition, in Patent Document 1, artificial graphite is used as a negative electrode material, and any effect upon the negative electrode using a silicon-containing material and surface coating film on the negative electrode is not described clearly.

Patent Document 2 discloses that use of an additive for a lithium-ion battery, including an ion conductor having a specific structure and a compound having a maleimide structure can accelerate lithium-ion conduction and can improve the defect of an increase in resistance caused by the maleimide compound. However, in Patent Document 2, graphite is used as a negative electrode material, and any effect upon the negative electrode using a silicon-containing material and surface coating film on the negative electrode is not described clearly.

Non-Patent Document 1 discusses about the SEI film formability or battery characteristics depending on a difference in position (ortho-, meta- and para-) of phenylene dimaleimide. However, Non-Patent Document 1 merely discloses that phenylene dimaleimide in which para-functionalized substituents are selected has excellent SEI film formability, but there still remains a room for discussion about the structure of maleimide compound capable of providing optimized battery characteristics.

### [References]

### [Patent Documents]

Patent Document 1: International Patent Publication No. 2016/063964
Patent Document 2: Japanese Patent Application Laid-Open No. 2017-117792

### [Non-Patent Documents]

Non-Patent Document 1: Fu-Ming Wang et.al, Journal of Power Sources (231), pp. 18-22, 2013

### DISCLOSURE

### Technical Problem

Therefore, there is a need for a non-aqueous electrolyte capable of inhibiting an increase in battery resistance after repeating charge/discharge.

The present disclosure is designed to solve the problems of the related art, and therefore the present disclosure is directed to providing a non-aqueous electrolyte capable of inhibiting an increase in battery resistance when repeating charge/discharge cycles.

### Technical Solution

The inventors of the present disclosure have conducted intensive studies to solve the above-mentioned problem, and unexpectedly have found that it is possible to inhibit an increase in electrical resistance resulting from repetition of charge/discharge cycles by using a non-aqueous electrolyte including a bismaleimide compound having a specific chemical structure. The present disclosure is based on this finding.

In one aspect of the present disclosure, there is provided a non-aqueous electrolyte including a compound represented by the following Chemical Formula 1: 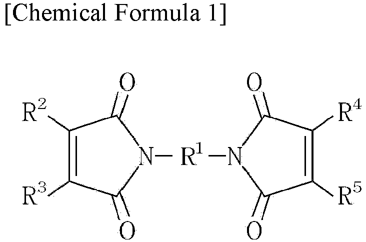 wherein R¹ represents a C3-C20 linear or branched alkylene group, and each of R² to R⁵ independently represents a hydrogen atom, a halogen atom or a C1-C5 alkyl group.

In Chemical Formula 1, R¹ preferably represents a C3-C10 linear or branched alkylene group.

In Chemical Formula 1, R¹ preferably represents a branched alkylene group.

In Chemical Formula 1, each of R² to R⁵ preferably represents a hydrogen atom.

Preferably, the compound represented by Chemical Formula 1 is 1,5-bis(maleimide)-2-methylpentane.

The compound represented by Chemical Formula 1 is present preferably in an amount of 0.1-5 wt% based on the total weight of the non-aqueous electrolyte.

The non-aqueous electrolyte according to the present disclosure preferably further includes at least one carbonate selected from cyclic carbonates and linear carbonates.

The non-aqueous electrolyte according to the present disclosure preferably further includes a lithium salt.

The lithium salt preferably includes LiPF₆.

In another aspect of the present disclosure, there is provided a lithium secondary battery including a positive electrode, a negative electrode, and the non-aqueous electrolyte according to the present disclosure, disposed between the positive electrode and the negative electrode.

The positive electrode preferably includes a nickel-cobalt-manganese (NCM) or nickel-cobalt-aluminum (NCA) ternary material.

The negative electrode preferably includes a silicon-containing material.

Preferably, the silicon-containing material is SiO.

### Advantageous Effects

According to the present disclosure, a high-quality solid electrolyte interface (SEI) film can be formed on the surface of a negative electrode by using a non-aqueous electrolyte including a bismaleimide compound having a specific chemical structure. Therefore, it is possible to provide a non-aqueous electrolyte capable of inhibiting an increase in battery resistance when repeating charge/discharge cycles.

### DESCRIPTION OF DRAWINGS

FIG. 1 shows the result of the dQ/dV-V curve of Example 1 and Comparative Example 1.
FIG. 2 is a graph illustrating the relationship between cycle number and direct current resistance obtained by carrying out a charge/discharge cycle test of Example 1 and Comparative Example 1.
FIG. 3 shows the result of alternating current impedance of Example 1 and Comparative Example 1, determined after 200 charge/discharge cycles.
FIG. 4 is a graph illustrating the relationship between cycle number and direct current resistance obtained by carrying out a charge/discharge cycle test of Example 1 and Comparative Examples 1-3.
FIG. 5 is a graph illustrating the relationship between cycle number and direct current resistance obtained by carrying out a charge/discharge cycle test of Example 1 and Comparative Examples 1, 4 and 5.

### BEST MODE

In one aspect of the present disclosure, there is provided a non-aqueous electrolyte including a compound represented by the following Chemical Formula 1 as an additive: 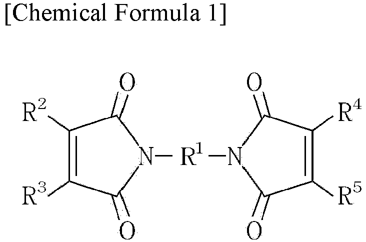 wherein R¹ represents a C3-C20 linear or branched alkylene group, and each of R² to R⁵ independently represents a hydrogen atom, a halogen atom or a C1-C5 alkyl group.

Unless otherwise stated, `alkyl group' refers to a linear or branched monovalent saturated hydrocarbon group.

Unless otherwise stated, `alkylene group' refers to a divalent saturated hydrocarbon group.

Unless otherwise stated, `halogen atom' refers to a fluorine atom, a chlorine atom, a bromine atom, an iodine atom or an astatine atom. Preferably, `halogen atom' refers to a fluorine atom, a chlorine atom, a bromine atom or an iodine atom.

In Chemical Formula 1, R¹ preferably represents a C3-C15 alkylene group, more preferably a C3-C10 alkylene group, far more preferably a C3-C7 alkylene group, even more preferably a C3-C6 alkylene group, even much more preferably a C4-C7 alkylene group, and most preferably a C4-C6 alkylene group. Particular examples of the alkylene group may include methylethylene group, n-propylene group, 1-methylpropylene group, 2-methylpropylene group, isopropylene group, n-butylene group, s-butylene group, n-pentylene group, 1-methylbutylene group, 2-methylbutylene group, 3-methylbutylene group, 1,1-dimethylpropylene group, 1,2-dimethylpropylene group, 2,2-dimethylpropylene group, 1,3-dimethylpropylene group, n-hexylene group, 1,1-dimethylbutylene group, 1,2-dimethylbutylene group, 1,3-dimethylbutylene group, 2,2-dimethylbutylene group, 2,3-dimethylbutylene group, 3,3-dimethylbutylene group, 1,4-dimethylbutylene group, 1-methylpentylene group, 2-methylpentylene group, 3-methylpentylene group, 1-ethylbutylene group, 2-ethylbutylene group, 1-propylpropylene group, 2-propylpropylene group, butylethylene group, pentylmethylene group, 1-ethyl-2-methylpropylene group, 1-ethyl-3-methylpropylene group, 2-ethyl-3-methylpropylene group, 1-methyl-1-ethylpropylene group, 2-methyl-2-ethylpropylene group, 1,1-diethylethylene group, 1,2-diethylethylene group, 1-propyl-2-methylethylene group, 1-methyl-1-propylethylene group, 1-methylhexylene group, 2-methylhexylene group, 3-methylhexylene group, 1-ethylpentylene group, 2-ethylpentylene group, 3-ethylpentylene group, 1-propylbutylene group, 2-propylbutylene group, 1-butylpropylene group, 2-butylpropylene group, pentylethylene group, hexylmethylene group, 1,2-dimethylpentylene group, 1,3-dimethylpentylene group, 1,4-dimethylpentylene group, 1,5-dimethylpentylene group, 2,3-dimethylpentylene group, 2,4-dimethylpentylene group, 1,1-dimethylpentylene group, 2,2-dimethylpentylene group, 3,3-dimethylpentylene group, or the like.

According to an embodiment, in Chemical Formula 1, R¹ preferably represents a branched alkylene group. In Chemical Formula 1, R¹ preferably represents a C3-C15 branched alkylene group, more preferably a C3-C10 branched alkylene group, far more preferably a C3-C7 branched alkylene group, even more preferably a C3-C6 branched alkylene group, even much more preferably a C4-C7 branched alkylene group, and most preferably a C4-C6 branched alkylene group.

Particular examples of R¹ may include 1-methylbutylene group, 2-methylbutylene group, 3-methylbutyene group, 1-methylpentylene group, 2-methylpentylene group, 3-methylpentylene group, or the like.

In Chemical Formula 1, particular examples of C1-C5 alkyl group represented by each of R² to R⁵ may include methyl group, ethyl group, propyl group, butyl group and pentyl group.

In Chemical Formula 1, at least one of R² to R⁵ preferably represents a hydrogen atom, more preferably at least two of them represent hydrogen atoms, even more preferably at least three of them represent hydrogen atoms, and most preferably all of them represent hydrogen atoms.

Particular examples of the compound represented by Chemical Formula 1 may include 1,5-bis(maleimide)-2-methylpentane, 1,5-bis(maleimide)-1-methylpentane, or the like. Preferably, the compound contained in the non-aqueous electrolyte according to the present disclosure is 1,5-bis(maleimide)-2-methylpentane.

The compound represented by Chemical Formula 1 is present preferably in an amount of 0.1-5 wt%, more preferably 0.1-1 wt%, and most preferably 0.3-0.7 wt%, based on the total weight of the non-aqueous electrolyte. When the compound represented by Chemical Formula 1 is present in the above-defined range, a soft coating film may be formed on the surface of a negative electrode, and thus an increase in battery resistance may be further inhibited.

Only one type of the compound represented by Chemical Formula 1 may be used alone, or a plurality of compounds represented by Chemical Formula 1 may be used in combination. When using a plurality of compounds represented by Chemical Formula 1, the combined weight of the compounds preferably falls within the above-defined range.

The non-aqueous electrolyte according to the present disclosure preferably may further includes at least one carbonate selected from cyclic carbonates and linear carbonates. Preferably, the non-aqueous electrolyte according to the present disclosure may include a cyclic carbonate and linear carbonate.

Particular examples of the cyclic carbonate may include ethylene carbonate (EC), propylene carbonate (PC), vinylene carbonate (VC), methylvinylene carbonate, ethylvinylene carbonate, 1,2-diethylvinylene carbonate, vinylethylene carbonate (VEC), 1-methyl-2-vinylethylene carbonate, 1-ethyl-2-vinylethylene carbonate, 1-methyl-2-vinylethylene carbonate, 1,1-divinylethylene carbonate, 1,2-divinylethylene carbonate, 1,1-dimethyl-2-methyleneethylene carbonate, 1,1-diethyl-2-methyleneethylene carbonate, ethynylethylene carbonate, 1,2-diethynylethylene carbonate, 1,2-butylene carbonate, 2,3-butylene carbonate, 1,2-pentylene carbonate, 2,3-pentylene carbonate, chloroethylene carbonate and a combination thereof.

Particular examples of the linear carbonate may include dimethyl carbonate (DMC), ethylmethyl carbonate (EMC), methylpropyl carbonate (MPC), methylisopropyl carbonate, methylbutyl carbonate, diethyl carbonate (DEC), ethylpropyl carbonate, ethylbutyl carbonate, dipropyl carbonate, propylbutyl carbonate and a combination thereof.

The cyclic carbonate may include a cyclic carbonate containing a fluorine atom. Particular examples of the cyclic carbonate containing a fluorine atom may include fluorovinylene carbonate, trifluoromethylvinylene carbonate, fluoroethylene carbonate, 1,2-difluoroethylene carbonate, 1,1-difluoroethylene carbonate, 1,1,2-trifluoroethylene carbonate, tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, 4-fluoro-1,3-dioxolan-2-one, trans- or cis-4,5-difluoro-1,3-dioxolan-2-one, 4-ethylnyl-1,3-dioxolan-2-one and a combination thereof.

Particularly, among the carbonates, ethylene carbonate and propylene carbonate, which are cyclic carbonates, are high-viscosity organic solvents, have a high dielectric constant and are capable of easily dissociating the lithium salt in an electrolyte, and thus are used preferably. When using such a cyclic carbonate mixed with a linear carbonate, such as dimethyl carbonate, diethyl carbonate, ethylmethyl carbonate, or the like, at an adequate ratio, it is possible to prepare an electrolyte having high electrical conductivity preferably.

The non-aqueous electrolyte according to the present disclosure may include a mixture of a cyclic carbonate with a linear carbonate, wherein the volume ratio of the cyclic carbonate to the linear carbonate is preferably 1:9-9:1, more preferably 2:8-8:2, and most preferably 2:8-4:6.

The non-aqueous electrolyte according to the present disclosure may further include an ester compound. The ester compound may include carboxylate, or the like. Particular examples of the carboxylate may include methyl formate, ethyl formate, methyl acetate, ethyl acetate, propyl acetate, butyl acetate, methyl propionate, ethyl propionate, propyl propionate, methyl butyrate, ethyl butyrate, propyl butyrate, methyl valerate, ethyl valerate, propyl valerate, γ-butyrolactone, γ-valerolactone, γ-caprolactone, σ-valerolactone, ε-caprolactone, those carboxylate compounds whose hydrogen atoms are partially substituted with fluorine atoms, and a combination thereof.

In addition to the above-listed examples, the non-aqueous electrolyte according to the present disclosure may include the other solvents, such as ether compounds including a cyclic ether or linear ether, polyether, sulfur-containing solvents and phosphorus-containing solvents, with no particular limitation, as long as such solvents do not adversely affect the object of the present disclosure.

Particular examples of the cyclic ether may include tetrahydrofuran and 2-methyltetrahydrofuran. In addition, the non-aqueous electrolyte according to the present disclosure may further include a linear ether. Particular examples of the linear ether may include dimethyl ether, diethyl ether, dipropyl ether, methylethyl ether, methylpropyl ether and ethylpropyl ether.

The non-aqueous electrolyte according to the present disclosure may include an electrolyte used conventionally for a secondary battery. The electrolyte functions as a medium through which ions participating in the electrochemical reactions in a secondary battery are transported. Particularly, the non-aqueous electrolyte according to the present disclosure is useful as an electrolyte for a lithium secondary battery, and in this case, the non-aqueous electrolyte includes a lithium salt as an electrolyte salt.

Particular examples of the lithium salt contained in the non-aqueous electrolyte according to the present disclosure may include LiPF₆, LiBF₄, LiB₁₂F₁₂, LiAsF₆, LiFSO₃, Li₂SiF₆, LiCF₃CO₂, LiCH₃CO₂, LiCF₃SO₃, LiC₄F₉SO₃, LiCF₃CF₂SO₃, LiCF₃(CF₂)₇SO₃, LiCF₃CF₂(CF₃)₂CO, Li(CF₃SO₂)₂CH, LiNO₃, LiN(CN)₂, LiN(FSO₂)₂, LiN(F₂SO₂)₂, LiN(CF₃SO₂)₂, LiN(C₂F₅SO₂)₂, LiC(CF₃SO₂)₃, LiP(CF₃)₆, LiPF(CF₃)₅, LiPF₂(CF₃)₄, LiPF₃(CF₃)₃, LiPF₄(CF₃)₂, LiPF₄(C₂F₅)₂, LiPF₄(CF₃SO₂)₂, LiPF₄(C₂F₅SO₂)₂, LiBF₂C₂O₄, LiBC₄O₈, LiBF₂(CF₃)₂, LiBF₂(C₂F₅)₂, LiBF₂(CF₃SO₂)₂, LiBF₂(C₂F₅SO₂)₂, LiSbF₆, LiAlO₄, LiAlF₄, LiSCN, LiClO₄, LiCl, LiF, LiBr, LiI, LiAlCl₄, LiFSI, LiTFSI, or the like. Particularly, the non-aqueous electrolyte preferably includes an inorganic salt, such as LiPF₆, LiBF₄, LiAsF₆ or LiClO₄. According to an embodiment of the present disclosure, the lithium salt contained in the non-aqueous electrolyte may include LiPF₆, most preferably. Only one type of lithium salt may be used alone, or a plurality of lithium salts may be used in combination.

According to an embodiment of the present disclosure, the lithium salt contained in the non-aqueous electrolyte may include lithium bis(fluorosulfonyl)imide (LiFSI), lithium bis(trifluoromethanesulfonyl)imide (LiTFSI), or the like. According to the embodiment of the present disclosure, the lithium salt contained in the non-aqueous electrolyte may include LiPF₆ in combination with LiFSI.

Although the content of the electrolyte salt is not particularly limited, the electrolyte salt may be present in an amount 0.1-5 mol/L or less, preferably 0.5-3 mol/L or less, more preferably 0.5-2 mol/L or less, based on the total volume of the non-aqueous electrolyte. When the content of the electrolyte salt falls within the above-defined range, it is possible to obtain sufficient battery characteristics.

The non-aqueous electrolyte according to the present disclosure may further include at least one additive. The additive may include a flame retardant, a wetting agent, a stabilizer, an anti-corrosive agent, a gelling agent, an over-charge preventing agent, a negative electrode coating film-forming additive, or the like.

In another aspect of the present disclosure, there is provided a lithium secondary battery including: a positive electrode; a negative electrode; and the non-aqueous electrolyte according to the present disclosure, disposed between the positive electrode and the negative electrode.

The lithium battery including the non-aqueous electrolyte according to the present disclosure may use any positive electrode and negative electrode that may be used in the known lithium secondary batteries with no particular limitation, and may be manufactured by introducing the electrodes to a casing together with the non-aqueous electrolyte according to the present disclosure. In addition, a separator may be interposed between the positive electrode and the negative electrode.

For example, the positive electrode used for the lithium secondary battery according to the present disclosure may be obtained by coating a positive electrode slurry including a positive electrode active material, a binder, a conductive material and a solvent on a positive electrode current collector, followed by drying and pressing.

The positive electrode current collector is not particularly limited, as long as it causes no chemical change in the corresponding battery and has conductivity. Particular examples of the positive electrode current collector may include stainless steel, aluminum, nickel, titanium, baked carbon, aluminum or stainless steel surface-treated with carbon, nickel, titanium or silver, or the like.

The positive electrode active material is a compound capable of reversible lithium intercalation/deintercalation, and particular examples thereof may include lithium composite metal oxides containing at least one metal, such as cobalt, manganese, nickel or aluminum, and lithium. More particularly, the lithium composite metal oxides may include lithium-manganese oxides (e.g. LiMnO₂, LiMn₂O₄, etc.), lithium-cobalt oxides (e.g., LiCoO₂, etc.), lithium-nickel oxides (e.g., LiNiO₂, etc.), lithium-nickel-manganese oxides (e.g., LiNi_{1-y1}Mn_{y1}O₂ (wherein 0 < y1 <1), LiMn_{2-z1}Ni_{z1}O₄ (wherein 0 < z1 < 2)), lithium-nickel-cobalt oxides (e.g., LiNi_{1-y2}Co_{y2}O₂ (wherein 0 < y2 < 1)), lithium-manganese-cobalt oxides (e.g., LiCo_{1-y3}Mn_{y3}O₂ (wherein 0 < y3 < 1), LiMn_{2-z2}Co_{z2}O₄ (wherein 0 < z2 < 2)), lithium-nickel-manganese-cobalt oxides (e.g., Li(Niₚ₁Co_{q1}Mnᵣ₁)O₂ (0 < p1 < 1, 0 < q1 < 1, 0 < r1 < 1, p1 + q1 + r1 = 1) or Li(Niₚ₂Co_{q2}Mnᵣ₂)O₄ (0 < p2 < 2, 0 < q2 < 2, 0 < r2 < 2, p2 + q2 + r2 = 2)), lithium-nickel-cobalt-transition metal (M) oxides (e.g., Li(Niₚ₃Co_{q3}Mnᵣ₃M_{S3})O₂ (wherein M is selected from the group consisting of Al, Fe, V, Cr, Ti, Ta, Mg and Mo, and each of p3, q3, r3 and s3 represents the atomic proportion of each element satisfying 0 < p3 < 1, 0 < q3 < 1, 0 < r3 < 1, 0 < s3 < 1, and p3 + q3 + r3 + s3 = 1)), or the like, and any one compound of them may be used alone, or two or more compounds of them may be used.

Preferably, with a view to improvement of the capacity characteristics and stability of a battery, the lithium composite metal oxide may be a lithium composite metal oxide containing a metal, such as nickel, and lithium. Particularly, the positive electrode active material may include lithium-nickel oxide (e.g. LiNiO₂, etc.), lithium-nickel-manganese-cobalt oxide (e.g. Li(Ni_{0.6}Mn_{0.2}Co_{0.2})O₂, Li(Ni_{0.5}Mn_{0.3}Co_{0.2})O₂, Li(Ni_{0.8}Mn_{0.1}Co_{0.1})O₂, etc.), lithium-nickel-cobalt-aluminum oxide (e.g. Li(Ni_{0.8}Co_{0.15}Al_{0.05})O₂, etc.), or the like. Particularly, it is preferred in terms of cost to use lithium-nickel-manganese-cobalt oxide or lithium-nickel-cobalt-aluminum oxide, which is a nickel-cobalt-manganese (CNM) or nickel-cobalt-aluminum (NCA) ternary material.

The positive electrode active material may be used preferably in an amount of 80-99 wt%, more preferably in an amount of 90-99 wt%, based on the total weight of the solid content in the positive electrode mixture. When the content of the positive electrode active material falls within the above-defined range, it is possible to obtain high energy density and capacity.

The binder is an ingredient which assists binding between the active material and the conductive material and binding to the current collector. In general, the binder may be used preferably in an amount of 1-30 wt%, more preferably in an amount of 1-10 wt%, based on the total weight of the solid content in the positive electrode mixture. Particular examples of the binder may include polyvinylidene fluoride, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer (EPDM), sulfonated EPDM, styrene-butadiene rubber, fluoro-rubber, or the like.

The conductive material is an ingredient imparting conductivity, while not causing any chemical change in the lithium secondary battery according to the present disclosure, and may be used preferably in an amount of 0.5-50 wt%, more preferably in an amount of 1-20 wt%, based on the total weight of the solid content in the positive electrode mixture. When the content of the conductive material falls within the above-defined range, it is possible to improve electrical conductivity and to obtain high energy density and capacity.

Particular examples of the conductive material may include: carbon powder, such as carbon black, acetylene black, ketjen black, channel black, furnace black, lamp black or thermal black; graphite powder, such as natural graphite, artificial graphite or graphite having a well-developed crystal structure; conductive fibers, such as carbon fibers or metallic fibers; metal powder, such as aluminum or nickel powder; conductive whisker, such as zinc oxide or potassium titanate; conductive metal oxide, such as titanium oxide; and conductive materials, such as polyphenylene derivatives.

The solvent is not particularly limited, as long as it can form the positive electrode materials, including the positive electrode active material, a binder and a conductive material, into the form of a slurry. Particular examples of the solvent may include organic solvents, such as N-methyl-2-pyrrolidone (NMP), dimethyl formamide (DMF), acetone and dimethyl acetamide, and water. In addition, the solvent may be used in such an amount that the positive electrode slurry may have a desired level of viscosity, and for example, in such an amount that the solid content in the slurry may be 10-60 wt%, preferably 20-50 wt%.

For example, the negative electrode used for the lithium secondary battery according to the present disclosure may be obtained by coating a negative electrode slurry including a negative electrode active material, a binder, a conductive material and a solvent on a negative electrode current collector, followed by drying and pressing.

The negative electrode current collector generally has a thickness of 3-500 µm. The negative electrode current collector is not particularly limited, as long as it has high conductivity, while not causing any chemical change in the corresponding battery. Particular examples of the negative electrode current collector may include copper, stainless steel, aluminum, nickel, titanium, baked carbon, or copper or stainless steel surface-treated with carbon, nickel, titanium, silver, etc., aluminum-cadmium alloy, or the like. In addition, similarly to the positive electrode current collector, the negative electrode current collector may have fine surface irregularities formed on the surface thereof to increase the adhesion of a negative electrode active material, and may have various shapes, such as a film, a sheet, a foil, a net, a porous body, a foam or non-woven web body.

The negative electrode active material may include at least one selected from the group consisting of lithium metal, a carbonaceous material capable of reversible lithium-ion intercalation/deintercalation, metal or alloy of metal with lithium, metal composite oxide, material capable of lithium doping/dedoping, and a transition metal oxide.

The carbonaceous material capable of reversible lithium-ion intercalation/deintercalation may include any carbonaceous negative electrode active material used currently in a lithium-ion secondary battery with no particular limitation. Typical examples of the carbonaceous material include crystalline carbon, amorphous carbon or a combination thereof. Particular examples of the crystalline carbon may include graphite, such as amorphous, sheet-like, flake-like, spherical or fibrous natural graphite or artificial graphite. Particular examples of the amorphous carbon may include soft carbon (low-temperature baked carbon) or hard carbon, mesophase pitch carbide, baked cokes, or the like.

Particular examples of the metal or alloy of metal with lithium may include a metal selected from the group consisting of Cu, Ni, Na, K, Rb, Cs, Fr, Be, Mg, Ca, Sr, Si, Sb, Pb, In, Zn, Ba, Ra, Ge, Al and Sn, or alloys of those metals with lithium.

The metal composite oxide that may be used is selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0 ≤ x ≤ 1), LiₓWO₂ (0 ≤ x ≤ 1), and SnₓMe_{1-z}Me'_{y}O_{z} (wherein Me is Mn, Fe, Pb, Ge; Me' is Al, B, P, Si, element of Group 1, 2 or 3 in the Periodic Table, halogen; and 0 < x ≤ 1; 1 ≤ y ≤ 3; and 1 ≤ z ≤ 8).

The material capable of lithium doping/dedoping may include Si, SiOₓ(0 < x < 2), Si-Y alloy (wherein Y is an element selected from the group consisting of alkali metals, alkaline earth metals, Group 13 elements, Group 14 elements, transition metals, rare earth metal elements and combinations thereof, except Si), Sn, SnO₂, Sn-Y (wherein Y is an element selected from the group consisting of alkali metals, alkaline earth metals, Group 13 elements, Group 14 elements, transition metals, rare earth metal elements and combinations thereof, except Sn), or the like. At least one of such materials may be used in combination with SiO₂. Element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

The transition metal oxide may include lithium-containing titanium composite oxide (LTO), vanadium oxide, lithium vanadium oxide, or the like.

The negative electrode active material for a lithium secondary battery according to the present disclosure preferably uses a silicon-containing material, such as Si, SiOₓ (0 < x < 2), Si-Y alloy (wherein Y is an element selected from the group consisting of alkali metals, alkaline earth metals, Group 13 elements, Group 14 elements, transition metals, rare earth metal and combinations thereof, and Y is not Si), and a mixture of at least one of them with SiO₂. Particularly, it is more preferred to use SiO.

The negative electrode active material is present preferably in an amount of 80-99 wt%, more preferably 90-99 wt%, based on the total weight of the solid content of the negative electrode slurry.

The binder is an ingredient which assists binding among the conductive material, the active material and the current collector. The binder is added preferably in an amount of 1-30 wt%, more preferably 1-10 wt%, based on the total weight of the solid content in the negative electrode slurry. Particular examples of the binder may include polyvinylidene fluoride, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer (EPDM), sulfonated EPDM, styrene-butadiene rubber, fluoro-rubber, or the like. Only one of the binders may be used alone, or a plurality of compounds may be used in combination.

The conductive material is an ingredient for further improving the conductivity of the negative electrode active material, and is added preferably in an amount of 1-20 wt% based on the total weight of the solid content of the negative electrode slurry. The conductive material is not particularly limited, as long as it has conductivity while not causing any chemical change in a lithium secondary battery. Particular examples of the conductive material may include: graphite, such as natural graphite or artificial graphite; carbon black, such as acetylene black, ketjen black, channel black, furnace black, lamp black or thermal black; conductive fibers, such as carbon fibers or metallic fibers; metal powder, such as aluminum or nickel powder; conductive whisker, such as zinc oxide or potassium titanate; conductive metal oxide, such as titanium oxide; and conductive materials, such as polyphenylene derivatives.

The solvent is not particularly limited, as long as it can form the negative electrode materials, including a negative electrode active material, a binder and a conductive material, into the form of a slurry. Particular examples of the solvent may include water, and organic solvents, such as NMP and alcohol. In addition, the solvent may be used in such an amount that the negative electrode slurry may have a desired level of viscosity, and for example, in such an amount that the solid content in the slurry may be 50-75 wt%, preferably 50-65 wt%.

The separator for a lithium secondary battery according to the present disclosure functions to interrupt an internal short-circuit between both electrodes and to allow wetting with an electrolyte. For example, the separator may be prepared by mixing a polymer resin, a filler and a solvent to form a separator composition and coating the separator composition directly on the top of an electrode, followed by drying, to form a separator film. In a variant, the separator may be prepared by casting the separator composition on a support, followed by drying, and laminating the separator film separated from the support on the top of an electrode.

The separator may include a conventional porous polymer film, such as a porous polymer film made of a polyolefin-based polymer, including ethylene homopolymer, propylene homopolymer, ethylene/butene copolymer, ethylene/hexene copolymer or ethylene/methacrylate copolymer, and such porous polymer films may be used alone or in the form of a laminate. Otherwise, a conventional porous non-woven web, such as a polymeric non-woven web made of high-melting point glass fibers, polyethylene terephthalate fibers, or the like, may be used with no particular limitation.

Herein, the porous separator may generally have a pore diameter of 0.01-50 µm and a porosity of 5-95%. In addition, the porous separator may generally have a thickness of 5-300 µm.

Although the lithium secondary battery according to the present disclosure is not particularly limited in the external shape, it may have a cylindrical, prismatic, pouch-like or coin-like shape.

### MODE FOR DISCLOSURE

Hereinafter, the present disclosure will be explained in more detail with reference to examples and comparative examples. However, the scope of the present disclosure is not limited thereto.

### (Example 1)

### (1) Manufacture of Lithium Secondary Battery

### <Manufacture of Positive Electrode>

First, 96.5 parts by weight of a nickel-cobalt-manganese (NCM) ternary material (Li(Ni_{0.8}Mn_{0.1}Co_{0.1})O₂) as a positive electrode active material, 1.5 parts by weight of acetylene black as a conductive material and 2 parts by weight of polyvinylidene fluoride (PVDF) as a binder were dispersed in N-methyl-2-pyrrolidone (NMP) as a solvent to prepare a positive electrode slurry. Then, the prepared positive electrode slurry was applied uniformly onto aluminum foil and vacuum dried under heating, followed by roll pressing, to obtain a positive electrode.

### <Manufacture of Negative Electrode>

First, 96 parts by weight of a mixture containing graphite and SiO at a ratio of 9:1, as a negative electrode active material, 1.0 parts by weight of acetylene black as a conductive material and 3.0 parts by weight of each of styrene-butadiene rubber and carboxymethyl cellulose, as a binder, were dispersed in water to prepare a slurry. Then, the prepared negative electrode slurry was applied uniformly onto copper foil and vacuum dried under heating, followed by pressing, to obtain a negative electrode.

### <Preparation of Non-Aqueous Electrolyte>

First, 30 parts by volume of ethylene carbonate (EC) mixed with 70 parts by volume of ethyl methyl carbonate (EMC) was used as a solvent, and LiPF₆ was dissolved therein to a concentration of 1 M to prepare a solution. Then, 0.5 parts by weight of 1,5-bis(maleimide)-2-methylpentane (available from Kawaguchi Chemical Industry Co., Ltd.) was added to 100 parts by weight of the solution to obtain a non-aqueous electrolyte according to the present disclosure.

### <Manufacture of Lithium Secondary Battery>

The positive electrode, negative electrode and non-aqueous electrolyte obtained as described above were used together with a polyolefin-based film to obtain a pouch-type battery having an area of 12 cm².

### (Comparative Example 1)

A non-aqueous electrolyte and a lithium secondary battery including the same were obtained in the same manner as Example 1, except that no 1,5-bis(maleimide)-2-methylpentane was added to the non-aqueous electrolyte.

### (Comparative Example 2)

A non-aqueous electrolyte and a lithium secondary battery including the same were obtained in the same manner as Example 1, except that N,N'-1,3-phenylene dimaleimide was added to the non-aqueous electrolyte instead of 1,5-bis(maleimide)-2-methylpentane.

### (Comparative Example 3)

A non-aqueous electrolyte and a lithium secondary battery including the same were obtained in the same manner as Example 1, except that 1-maleimide-3-maleimidemethyl-3,5,5-trimethylcyclohexane was added to the non-aqueous electrolyte instead of 1,5-bis(maleimide)-2-methylpentane.

### (Comparative Example 4)

A non-aqueous electrolyte and a lithium secondary battery including the same were obtained in the same manner as Example 1, except that N-phenyl maleimide was added to the non-aqueous electrolyte instead of 1,5-bis(maleimide)-2-methylpentane.

### (Comparative Example 5)

A non-aqueous electrolyte and a lithium secondary battery including the same were obtained in the same manner as Example 1, except that N-cyclohexyl maleimide was added to the non-aqueous electrolyte instead of 1,5-bis(maleimide)-2-methylpentane.

### (2) Determination of dQ/dV-V Curve

The lithium secondary battery according to each of Example 1 and Comparative Example 1, obtained as described in part (1), was used and subjected to one charge cycle at 25°C to determine the dQ/dV-V curve.

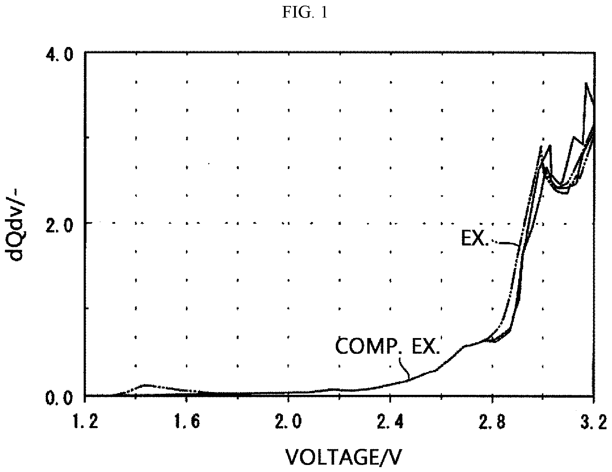

The graph obtained as a result is shown in FIG. 1. It can be seen from the result that the lithium secondary battery according to Example 1 forms a solid electrolyte interface (SEI) film on the negative electrode in an earlier stage, as compared to the lithium secondary battery according to Comparative Example 1.

### (2) Charge/Discharge Cycle Test

The lithium secondary battery according to each of Example 1 and Comparative Example 1, obtained as described in part (1), was used and subjected to a charge/discharge cycle test at 45°C under the conditions of a charge cut-off voltage of 4.2 V and a discharge cut-off voltage of 2.8 V. At the initial stage, and after 50, 100, 200 and 300 cycles, the direct current resistance was determined (discharge at 2.5 C, 10 seconds) at SOC 50% (= 3.7 V).

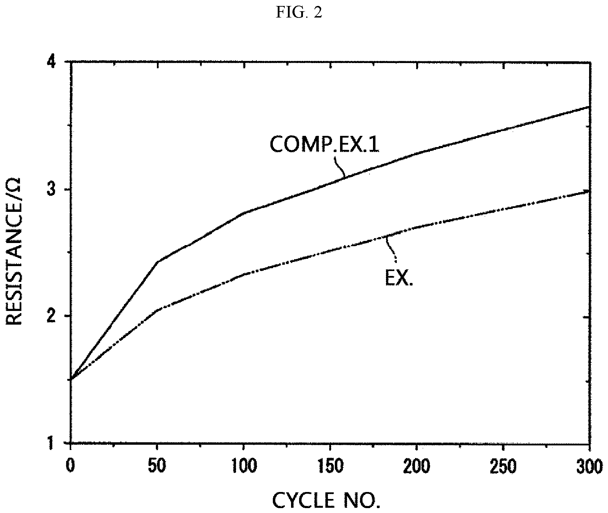

The graph obtained as a result of the test is shown in FIG. 2. It can be seen from the result that the lithium secondary battery according to Example 1 inhibits an increase in battery resistance when repeating charge/discharge cycles, as compared to the lithium secondary battery according to Comparative Example 1.

### (3) Determination of Alternating Current Impedance

The lithium secondary battery according to each of Example 1 and Comparative Example 1, obtained as described in part (1), was used and subjected to a charge/discharge cycle test at 45°C in the same manner as described above. At the initial stage, and after 50, 100, 200 and 300 cycles, the alternating current impedance was determined at SOC 100% (= 4.195 V) with an amplitude voltage of 5 mV.

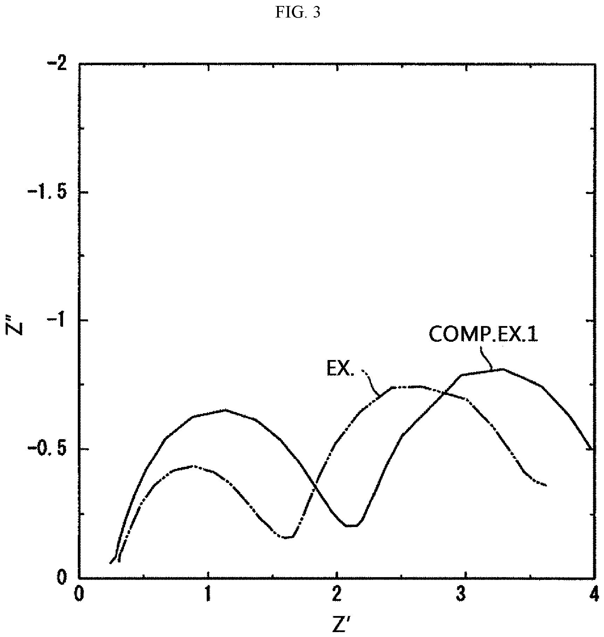

The graph obtained as a result of the test after 200 cycles is shown in FIG. 3. It can be seen from the result that the lithium secondary battery according to Example 1 shows a lower coating film resistance component at the negative electrode, as compared to the lithium secondary battery according to Comparative Example 1.

### (4) Comparison with Other Bismaleimide Compounds

The lithium secondary battery according to each of Example 1 and Comparative Example 1-5, obtained as described in part (1), was used and subjected to a charge/discharge cycle test at 45°C under the conditions of a charge cut-off voltage of 4.2 V and a discharge cut-off voltage of 2.8 V. At the initial stage, and after 50, 100, 200 and 300 cycles, the direct current resistance was determined (discharge at 2.5 C, 10 seconds) at SOC 50% (= 3.7 V).

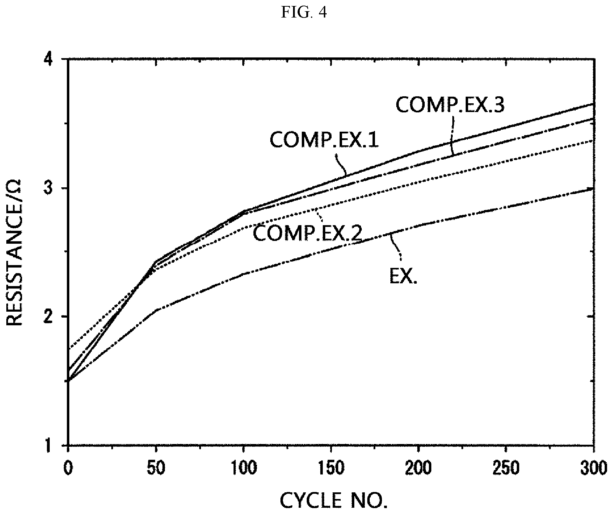

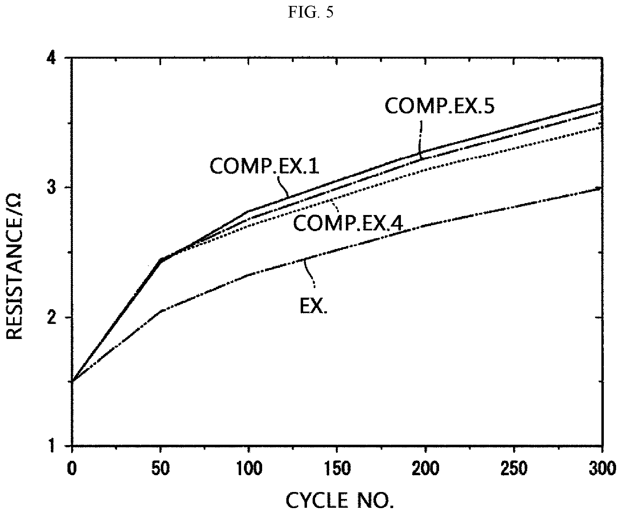

The graphs obtained as results of the test are shown in FIG. 4 and FIG. 5. It can be seen from the results that use of the lithium secondary battery according to Example 1 provides the highest effect of inhibiting an increase in battery resistance.

### INDUSTRIAL APPLICABILITY

The non-aqueous electrolyte according to the present disclosure forms a high-quality SEI film on the surface of a negative electrode and can inhibit an increase in battery resistance when repeating charge/discharge cycles, and thus shows high industrial applicability.

## Claims

1. A non-aqueous electrolyte comprising a compound represented by the following chemical formula 1: 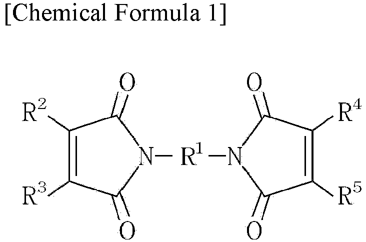 wherein R¹ represents a C3-C20 linear or branched alkylene group, and each of R² to R⁵ independently represents a hydrogen atom, a halogen atom or a C1-C5 alkyl group.

2. The non-aqueous electrolyte according to claim 1, wherein in chemical formula 1, R¹ represents a C3-C10 linear or branched alkylene group.

3. The non-aqueous electrolyte according to claim 1 or 2, wherein in chemical formula 1, R¹ represents a branched alkylene group.

4. The non-aqueous electrolyte according to any one of claims 1 to 3, wherein in chemical formula 1, each of R² to R⁵ represents a hydrogen atom.

5. The non-aqueous electrolyte according to any one of claims 1 to 4, wherein the compound represented by Chemical Formula 1 is 1,5-bis(maleimide)-2-methylpentane.

6. The non-aqueous electrolyte according to any one of claims 1 to 5, wherein the compound represented by Chemical Formula 1 is present in an amount of 0.1-5 wt% based on the total weight of the non-aqueous electrolyte.

7. The non-aqueous electrolyte according to any one of claims 1 to 6, which further comprises at least one carbonate selected from cyclic carbonates and linear carbonates.

8. The non-aqueous electrolyte according to any one of claims 1 to 7, which further comprises a lithium salt.

9. The non-aqueous electrolyte according to claim 8, wherein the lithium salt comprises LiPF₆.

10. A lithium secondary battery comprising:
a positive electrode;
a negative electrode; and
the non-aqueous electrolyte as defined in any one of claims 1 to 9, disposed between the positive electrode and the negative electrode.

11. The lithium secondary battery according to claim 10, wherein the positive electrode comprises a nickel-cobalt-manganese (NCM) or nickel-cobalt-aluminum (NCA) ternary material.

12. The lithium secondary battery according to claim 10 or 11, wherein the negative electrode comprises a silicon-containing material.

13. The lithium secondary battery according to any one of claims 10 to 12, wherein the silicon-containing material is SiO.
